# EUROPEAN PATENT APPLICATION

(11) **EP 2 896 644 A1**
(43) Date of publication of application: **22.07.2015**
(21) Application number: 14151740.9
(22) Date of filing: 20.01.2014
(51) Int. Cl.: C08G 75/00, C08F 20/38, C08F 28/04, C08G 75/14, C08L 81/04, G02B 1/04, H01M 4/00

(54) **SULFUR-BASED POLYMERS**

(71) Applicant: Construction Research & Technology GmbH, 83308 Trostberg (DE)
(72) Inventor: Walther, Burkhard, 84518 Garching (DE); Feichtenschlager, Bernhard, 83278 Traunstein (DE); Wölfle, Heimo, 83278 Traunstein (DE)

(57) **Abstract**

The present invention relates to curable compositions based on elemental sulfur and polymer components. The inventive composition cures in the presence of elemental sulfur, thus providing a novel composition with enhanced chemical and physical properties in particular useful for sealing and coating applications.

## Description

### Field of Invention

The invention relates to curable compositions that are useful in a wide variety of fields and applications. Particularly, the compositions and methods of the present invention are useful in sealing and coating applications, especially as films, adhesives, membranes etc., in particular as a barrier film with high resistance to chemicals, fuels and other petroleum hydrocarbons. Further the inventive curable composition remains stable in storage for long periods of time and is readily curable after application to a substrate.

### Background of Invention

In general, many conventional curable polymer compositions are used in articles or methods, such as films, coatings, adhesives and sealants.

Conventionally curable compositions based on mercaptan-terminated polysulfide polymers are reacted with a curing agent, usually an oxidizing agent such as sodium perborate, barium hydroxide, barium or manganese oxide or a metal peroxide that cure the liquid polysulfide polymer into a solid state by oxidative formation of a disulfide bond. Further the curing agent usually requires a catalyst to be activated. Generally, commercially available liquid polysulfide polymers are composed of repeating units of (-S-Alkyl-O-Alkyl-S-) with free mercaptan-terminals and wherein alkyl may be the same or different and of varying lengths. These liquid polysulfide polymers are generally oxidatively cured to form solid elastomers. To avoid premature solidification of such liquid polysulfide polymer-based curing compositions, the curing agents and polymers are stored separately and have to be mixed prior to application to any surface. To overcome the limitation of having to use two packages in preparation of respective curable composition prior to use, one-component systems have been developed. These are themselves limited in the selection of the curable polysulfide polymers with their limited physical properties.

Polysulfide-based materials provide a number of useful features. These materials show an outstanding resistance towards organic chemicals and fuel, such as diesel, gasoline and kerosene, they present superb UV-resistance and are robust with high elongation at break. Therefore, such materials are widely utilized as sealants in gas stations, airports, etc. where potential hazardous liquids need to be confined to specific areas or containments. As mentioned, such materials are formulations consisting of at least two components. One component tends to be an oxidation agent, e.g. MnO₂ that leads to or assists the oxidative crosslinking of polysulfide polymer chains contained in the mixtures. However, such formulations have the drawback that due to the oxidative component problems arise in their production, storage and appearance of the final cured products. Coloring of the cured material is very often a result of the manganese oxide constituent of the curing composition leading to a dark brown coloring of the product.

EP 0,702,072 discloses a rapid-curing one-part liquid polysulfide polymer sealant, wherein the composition comprises a mercaptan-terminated polysulfide polymer, 5 - 25 % sodium hydroxide as a cure catalyst and oxidizing curing agents such as sodium perborate. This has the disadvantage that the perborate based curing agents are toxic and the shelf life of borate containing compositions is limited. The sodium hydroxide content tends to effloresce and causes aesthetic problems and limits the potential use of the respective compositions.

EP 1,462,501 describes compositions useful as adhesives and sealants, wherein the curing reaction is based on Michael-Addition reaction. Basically a curable mixture is disclosed that comprises at least one multifunctional Michael-donor, at least one multi-functional Michael acceptor, at least one anion of a Michael-donor and 5% or less of a non-reactive component having a boiling point of 150 C or less. The presence of such volatile non-reactive compounds is generally undesirable. Not described are curing reactions involving mercaptan-terminated polymers. Further, the disclosed curable compositions are described to be used in multi-pack system, i.e. the various ingredients are stored in two or more containers until the contents are mixed together to form a curable mixture and do not provide the beneficial chemical properties typically associated with polysulfide polymers.

US 4,096,131 describes moisture curable one-pack polysulfide sealants. The sealants are the reaction product of a silanized polysulfide and a disulfide containing group. The sealant composition contains unreacted SH-groups that react with a silane. This product has the draw-back that the process for preparation of the reagent requires reaction of silanes with polysulfides under anhydrous conditions to obtain a silanized polysulfide, wherein the reaction is carried out at a certain temperature for a certain amount of time. This usually requires boiling the reaction mixture for several hours.

US 4,100,148 provides a storage stable, quickly hardening one-component sealant comprising mercapto-terminated liquid polysulfide polymers. The polysulfide polymers are cured via an oxidizing mechanism by employing microencapsulated oxidizing agents such as PbO₂ and MnO₂.

US 4,939,218 discloses sulfur containing aliphatic acrylic compounds used in a process for making cross-linked polymer articles. Such sulfur-containing aliphatic acrylic compounds are crosslinked with polymerizable monomers containing ethylenic bonds. The product is a sulfur containing polymer with high refractive index. Similar sulfur containing polymers are disclosed by R. Okutsu et al. in Chem. Mater. 2008, 20, 4017-4023*.* The sulfur containing polymeric material consists of cyclic dithiocarbonate, norbornene and (meth)acrylate units that after polymerization develop high refractive indices products. Further, the sulfur containing polymers disclosed in both documents may present sulfur contents of more than 30 %. The sulfur though is not introduced into the polymers as elemental sulfur and further does not present polysulfide chains in the sense of the present invention. The disclosed sulfur containing polymers are used for cast polymerization and the manufacture of articles with high refractive index, such as lenses. Thus, these sulfur containing aliphatic acrylic compounds cannot be utilized as curable liquid polymer sealants.

WO 2013/1023216 discloses high sulfur content polymer, wherein the polymeric composition includes elemental sulfur as a co-polymer at a level of at least 50 weight percent of the co-polymer, generally subjected to radical polymerization. One or more co-monomers may be selected from ethylenically unsaturated compounds. The disclosed sulfur co-polymer though requires several reaction steps with significant heating to temperatures in the range of more than 200 degrees Celsius resulting in a pre-polymer. This pre-polymer then is further heat-treated to yield the final formed article. What is not disclosed is a sulfur co-polymer composition based on Michael reaction releasable compounds.

Melt polymerization of elemental sulfur is utilized in the manufacture of sulfur concrete. Sulfur concrete is a composite construction material, composed of sulfur, a coarse aggregate such as gravel and a fine aggregate such as sand. Cement and water, basic components of normal hydraulic binder based concrete, are not part of sulfur concrete. The sulfur concrete material is heated above the melting point of sulfur of approximately 140 degrees Celsius for polymerization. After cooling and solidification the concrete reaches a high strength without the need of prolonged curing like normal concrete. Sulfur concrete finds use as a specialty building material, e.g. for acid resistant structures Blight et al in Brit. Polymer J., March 1980, 5- 11*,* report on the reaction of elemental sulfur with olefinic substances to give a mixture of polysulfides and unreacted elemental sulfur and further characterize such polysulfides formed by the interaction of dicyclopentadiene and styrene with elemental sulfur. Dicyclopentadiene and styrene are known to be used as additives in sulfur concrete production to control the allotropic composition of elemental sulfur.

There are a number of disadvantages associated with conventional polysulfide polymer-based curable compositions or resins. In general the one-component (1 K) formulations based on oxidative curing mechanism all show significant deficits in performance concerning, particularly storage stability and reactivity profile. Further, the ease of manufacturing, preparation and application is poor for the existing polysulfide polymer systems because the curable compositions are provided as multi-component or multi-pack systems or are cost-intensive and difficult to manufacture one-component systems.

### Summary of Invention

There continues to be the need of providing improved, curable compositions or resins showing at least the beneficial properties of the conventional two-component (2K) systems, paired with the ease of use of 1 K curable compositions.

Acrylate based alternatives show much better mechanical properties and improved applicability however the resistance towards chemicals, acids, alkalis or caustic agents and especially fuels or other petroleum hydrocarbons, is significantly lower. Hence, acrylate-based polymers cannot be used in demanding applications where conventional polysulfide polymer-based resins find utility as described above.

It was an object of the invention to provide a composition useful as a one component coating and sealing composition that remains stable when stored over longer periods of time and, when used or applied to surfaces under ambient conditions, delivers a seal or coating with very good physical and chemical properties.

It was surprisingly found that acrylate-based polymers may be cross-linked with elemental sulfur resulting in polysulfide-based materials with the outstanding resistance features of conventional polysulfide polymers paired with the beneficial mechanical or physical properties of acrylate-based resins.

Therefore this invention provides a storage-stable 1 K polysulfide system that at ambient temperatures is simple to prepare, easy to use and based on a water-triggered curing mechanism. The characteristics of the inventive 1 K polysulfide system make it particularly useful for on-site applications such as coating or sealing of surfaces a person skilled in the art may consider.

Prior art describes methods for crosslinking polymers with mercapto-groups forming disulfide bridges. These crosslinking reactions are generally based on oxidative polymerization.

An aspect of the invention lies in the provision of a method for in-situ generation of thiol-groups in the reaction mixture, that together with the elemental sulfur crosslink ethylenically unsaturated polymers in a Michael-like addition reaction. An advantage of the inventive method is that the polymerization of the monomers is based on an addition reaction, rendering the system basically insensitive to atmospheric oxygen. The reaction is initiated by water: In general, standard humidity is sufficient to allow full curing of the polymer mixture in the course of several hours, usually between 0.5 and 72 hours. A further aspect of the invention is found in the relative temperature insensitivity of the curing process. This allows for utilizing the resin in low temperature applications, such as in cool or cold climate, cold rooms, cooling chambers or any other cooled situations, as well as in appliances such as refrigerators, freezers etc.

The curable mixture of the present invention may also contain one or more additives usually included in such mixtures to improve the properties of the final product, such as tackifiers, emulsifiers, plasticizers, thickeners and so forth.

### Detailed Description of the Invention

It was an object of the present invention to provide a novel composition that may be formulated as a one-component system with practically unrestricted shelf-life as long as water-free conditions are maintained. Additionally the novel curable composition is easy to use and is not associated with unpleasant or strong odor.

The problem is solved by the present inventive curable composition comprising at least one multithioester, sulfur and at least one ethylenically unsaturated component resulting in a water sensitive composition. By contact with water the thioester component hydrolyses and, in-situ, sets mercapto terminated components free. These immediately further react with the ethylenically unsaturated components present in the composition in a thiol-based Michael-like addition into the cured polymer product. Such a composition is easy to manufacture and, if kept under water- or moisture-free conditions, is extremely storage stable.

Thus, the invention provides a storage stable 1 K polysulfide composition based on a water-triggered curing mechanism. A further benefit of the inventive composition is the non-oxidative and non-radical curing mechanism and its insensitivity towards atmospheric oxygen or any other oxidizing and reducing agents. This altogether significantly increases the shelf-life of the novel 1 K curable composition.

The basic binder system comprises at least one multifunctional thioester compound, sulfur powder, a catalyst and at least one ethylenically unsaturated compound, particularly advantageously an acrylate compound that may be selected from mono-, di-, tri-, tetra- or pentaacrylate as cross-linker, as well as, optionally, as reactive thinning agent.

Acrylates are a family of polymers, which are a type of vinyl polymer made from acrylate monomers. Acrylate monomers are esters that contain vinyl groups directly attached to the carbonyl carbon. Preferably the acrylates are one to 20-fold ethoxylated or propoxylated or mixed ethoxylated or propoxylated or non-oxylated glycerol, trimethylolpropane, trimethylolethane or pentaerythrite.

Advantageous acrylate components may be selected from ethyleneglycoldiacrylate, 1,2-propanedioldiacrylate, 1,3-propanedioldiacrylate, 1,4-butanedioldiacrylate, 1,3-butanedioldiacrylate, 1,5-pentanedioldiacrylate, 1,6-hexanedioldiacrylate, 1,8-octanedioldiacrylate, neopentylglycoldiacrylate, 1,1-, 1,2-, 1,3- or 1,4-cyclohexanedimethanoldiacrylate, 1,2-, 1,3-or 1,4-cyclohexanedioldiacrylate, trimethylolpropanetriacrylate, ditrimethylolpropanepenta- or hexaacrylate, pentaerythrittriacrylate, pentaerythrittetraacrylate, glycerindiacrylate, glycerintriacrylate, di- or polyacrylates of sugar alcohols, preferably of sorbit, mannit, diglycerol, threit, erythrit, adonit (Ribit), arabit (Lyxit), xylit, dulcit (Galactit), maltit, isomaltit, or polyesterpolyols, polyetherols, poly-THF, poly-1,3-propanediol, polyethyleneglycol, urethaneacrylates or polycarbonateacrylates.

If a methacrylate is used it usually functions as a solvent, i.e. a reactive thinner. Typically reactive thinners are esters of methacrylic acid with alcohols of 1 - 20 carbon atoms.

Preferred acrylates are trimethylolpropanetriacrylate, pentaerythritetetraacrylat, dipentaerythritolpentaacrylate, glycerolformalmethacrylate, polypropyleneglycoldiacrylate.

Generally speaking thioesters are the product of the esterification reaction between a carboxylic acid and a thiol resulting in compounds with the functional group R-S-CO-R. A dithioester resembles a bifunctional ester of the general formula R-CO-S-R-S-CO-R, wherein R is a hydrocarbon-group or a single bond. A multifunctional thioester is the product of the esterification reaction between carboxylic acids and a polythiol, resulting in compounds with two or multiples of the functional moiety -S-CO-.

A preferred group of multifunctional thioester compounds are derived from polyols. Polyols are compounds with multiple hydroxyl functional groups available for organic reactions. This includes compounds with two hydroxyl groups, a diol, with three hydroxyl groups, a triol, with four, a tetrol and so on. Monomeric polyols such as glycerin, pentaerythritol, ethylene glycol and sucrose are of particular interest, but polymeric polyols may also be utilized. Multifunctional thioester compounds may also be derived from polyalcohols, such as polyols, polyetherols, polyesterols or polyacrylate polyols with respective functionality, preferably with a functionality of at least two. Also advantageously adipate of 1,4-butandithiol, succinate of 1,4-butandithiol, tetraacetate of pentaerithritol-tetrakis-mercaptopropionate, tetrabenzoate of pentaerithritol-tetrakis-mercaptopropionate, diacetate of Poly(ethylene glycol) dithiol, distearate of Poly(ethylene glycol) dithiol, polymeric ester of adipate and Poly(ethylene glycol) dithiol, diacetate of benzene dithioles, diacetate of toluene dithioles, triacetate of Trimethylolpropane tris(3-mercaptopropionate) or maleate of Poly(ethylene glycol) dithiol may be utilized. A preferred multifunctional thioester is derived from pentaerythritol-tetramercaptopropionate. Difunctonal thioester derived from dimercaptanes may also be envisaged such as distearoyl-1,4-butanethiolate or based on disulfanes, such as distearoyldisulfane or dibenzoyldisulfane, i.e. thioester compounds of the general structure stearoyl-S-S-stearoyl or benzoyl-S-S-benzoyl. Further the multifunctional thioester may present 2 - 20 hydrolysable functional groups, preferably 2 - 6 and more preferred 4 - 6, where such functional groups may preferably also constitute branched moieties.

Multifunctional thioesters may also encompass the following compounds described by formula's I, II, and III. 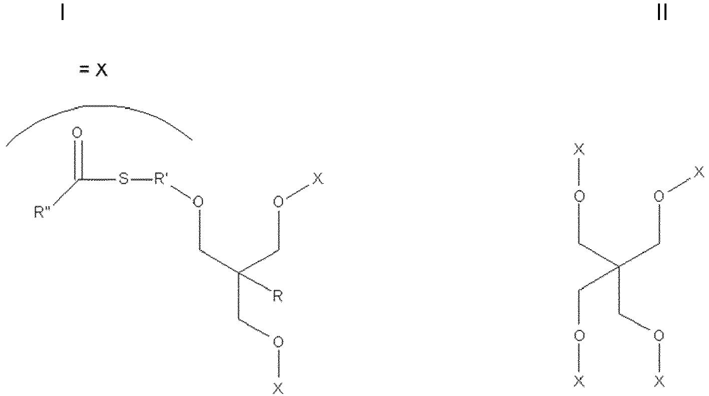 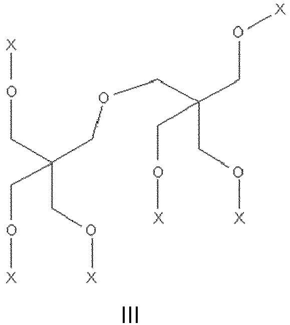 Wherein,
X independently is H, RCO-S-R¹-; or a polymer of the Formula HS[(CH₂(R')_{b}CH₂Sₐ)_{c}(R"Sₐ)_{d}(SH)_{f}]CH₂(R')_{b}CH₂SH where a is 1 - 5, b is 0 or 1, c is 5- 10, d is 0 - 0.05c and 0.05c ≥ f ≥ d, 1 > f which is d times (number of free valencies in R" - 2), R' is O, S or a divalent saturated organic radical consisting of C and H atoms and optionally O and/or S in COC, CSₐC or OH links.
R¹ independently is C₁ - C₂₀, optionally substituted, linear, cyclic or branched alkyl, aryl alkylaryl, aralkyl;
R² independently is C₁ - C₂₀, optionally substituted, linear, cyclic or branched alkyl, aryl alkylaryl, aralkyl, preferably-(CH₂)₁₋₆-CO-, more preferred -(CH₂)₂₋₆CO- and most preferred -CH₂-CH₂-CO-
R² is either H or C₁ - C₂₀ alkyl.

In a first step, the multifunctional thioester-compound hydrolyzes towards contact with water, either added to the mixture or simply derived from air humidity or environment moisture. This reaction is assisted by a catalyst such as an amine, phosphine, Lewis acids, carboxylates, organyls of tin (Sn), a lanthanide (Ln), zink (Zn), bismuth (Bi), titanium (Ti), zirconium (Zr), or any of the known catalysts used to increase the rate of reaction or in acceleration of addition reactions in coating and sealing compositions. Such catalysts may be selected from primary, secondary or tertiary amines as well as quarternary ammonium salts, imines or iminiumsalts. These may be aliphatic or aromatic, wherein aliphatic are preferred. Preferred tertiary amines may be selected from trimethylamine, triethylamine, tri-n-butylamine, ethyl-di-iso-Pro¬pylamine, methyl-di-iso-propylamine, N-methylmorpholine, N-methylpiperidine, tri-ethanol¬amine, N,N-dimethylethanolamine, N-methyldicyclohexylamine, dimethylcyclohexylamine, diethylcyclohex-ylamine, methyldicyclohexylamine, ethyldicyclohexylamine, 4-N,N-dimethylaminopyridine, 1,5-diazabicyclo[4.3.0]-non-5-en (DBN), 1,8-diazabicyclo[5.4.0]-undec-7-en (DBU), tetramethyl-guanidine, pyrrocoline, quinuclidine, 3-aminoquinuclidine or 3-hydroxyquinuclidine. Catalysts of particular advantage are 1,4-diaza-bicyclo[2,2,2]octan (DABCO), 1,5-diazabicyclo[4.3.0]-non-5-en (DBN), 1,8-diazabicyclo[5.4.0]-undec-7-en (DBU), N-methyldicyclohexylamine, quinuclidine, 3-aminoquinuclidine, 3-hydroxyquinuclidine, trimethylphosphine, triethylphosphine, tri-n-butylphosphine, dimethylphenylphosphine, Ti(IV) isopropoxide, Ti(IV) acetylacetonate, Ti(IV)tetrachloride, Zr(IV)acetate, Zr(IV)isopropoxide, Snchloride, Snnitrate, dibutyltinlaurate, Zn(II)chloride. The hydrolysis of the thioester releases terminal multifunctional thiols, at least a dithiol such as HS-R-SH. Subsequently the multifunctional thiol, at least a dithiol such as HS-R-SH reacts with elemental sulfur to form SH-terminated polysulfides HS-(Sₓ)ₙ-R-SH, wherein x may be any integer from 1-8, n any integer selected from 1 - 100, preferably 1 - 50 and in most cases may be an integer from 1 - 25. R is either a hydrocarbon-group or a single bond. The term "polysulfide" as used in the context of this invention is meant to describe a class of chemical compounds containing chains of sulfur atoms. Polysulfides above S5 are generally unstable, therefore it is believed that the resulting polysulfide will comprise a mixture containing S2, S3, S4, S5, S6, S7, S8 polysulfides and/or multiples thereof.

Within the formulation it is believed that the formed polysulfides subsequently react in the presence of alkaline catalysts (amine, phosphine, or any of the catalysts as listed above) in a Michael-type addition of the S-H-group from the polysulfide to compounds with ethylenically unsaturated bonds. Particularly advantageous are olefinic, such as vinylic bonds and even more advantageous are activated ethylenically unsaturated compounds or double bonds such as in acrylate esters, acrolein, acrylamides, acrylonitriles and vinyl ketones, within the formulation to form a cross-linked polymer system. Activated ethylenically unsaturated compounds contain double bond groups that are activated by direct attachment to a electronegative group such as a halogen, C=O, CN, CΞC, O or aryl. The adjacent groups increase the polarization of the double bond and so give rise to its reactivity or activation.

Via the addition of a certain amount of water capturing agent or desiccants (e.g. isocyanates, trialkoxysilanes, silazanes, molecular sieves) the shelf life, curing speed and pot life can be tuned.

Preferably the ratio of thioester : sulfur : acrylate based on weight can range from 4 :1 : 4 to 1 : 2 : 1, wherein the given ratio range is particularly suitable for the inventive curable composition.

The curable composition typically contains the individual components thioester in 1 - 20 weight-%, sulfur from 1 to 70, preferably 5 - 60, more preferred 10 - 50 weight-%, acrylate from 10 - 60 weight-% and up to 5 weight-% of additives, with weight-% being based on the total weight of the composition.

Typically the term acrylate component as used herein also is meant to encompass methacrylates. The acrylate component may present one or more acrylate groups of preferably up to 8. The acrylate component may be selected from an acrylic acid ester of polyalcohols, such as polyols, polyetherols, polyesterols, polyacrylate polyols and the like.

The acrylate component may be monomeric, oligomeric or polymeric. Suitable monomers include diethylenglycol dimethacrylate, tetraethylene glycol dimethacrylate, 2-ethyl-2 (hydroxymethyl) 1,3-propanediol trimethacrylate etc. By selection or combination of various acrylate components of varying lengths, a functional acrylate-mixture is provided with desired viscosity. The molecular weight of the acrylate component typically is from 72 to 2000 g/mol.

Since the curing of the mixture is activated by water, it is important that compounding of the present compositions be carried out in a water or moisture-free atmosphere and that the curable composition or mixture be maintained in such an atmosphere until used. This may be achieved by using desiccants. The desiccant may be for example a molecular sieve desiccant, but other water binding or capturing substances or agents may also be utilized. The obtained mixture can be filled into water and humidity-proof containers, collapsible containers, bags or cartridges and is storage stable for months provided the containment maintains exclusion of humidity. When the containers are opened after storage, also over prolonged periods of time and at a given temperature, the viscosity of the curable mixture will be similar to the viscosity of a freshly prepared curable mixture. Hence, such prepared and packaged curable compositions are characterized by outstanding storage stability. Storage temperature may vary from below -40 to 50 degrees Celsius. Curing of the curable composition or mixture after application to a surface or substrate is activated either by addition of water or merely by the humidity or moisture present in the environment. Once the mixture is utilized and after the water capturing agent, if present, is consumed, the binder system starts to crosslink and harden. It is contemplated that this process and chemical reaction is understood by the term to "cure" and believed to form a useful adhesive bond between substrates on to which the curable mixture is applied. The curing process is characterized by relatively rapid development of an essentially tack-free film or skin that toughens with age and by polymerization of the liquid material beneath the skin. Depending on the amount of water or moisture some skins develop almost instantly while others take as long as 24 hours. The curing period may be selected from within a range of minutes to several months and depends primarily on the amount of water or moisture available for the curing process or ambient temperature during curing and the ratio of exposed area of the curable composition used. The present curable composition also is particularly useful at low temperatures even at/or around 0 degrees Celsius conditions. Within a formulation ready for application, additional compounds, such as plasticizers, reactive thinners, pigments, fillers, such as calcium carbonate, barium sulfate, clay, titanium dioxide, soot, tertiary amines, thixotropic agents, accelerators, de-foaming agents, adhesion promoters etc. may be added. Depending on the components used for the curable composition the mechanical properties can be varied from hard and brittle to soft and elastic.

In general the present curable compositions can be used for all of the purposes for which prior 2K or conventional 1 K polysulfide polymer compositions have been used, e.g. caulking, sealing, potting, coating, impregnation of porous materials and the like. The produced cured materials adhere tenaciously to clean surfaces of wood, glass, metal, building materials like concrete or stone, plastics, leather and so forth. Additionally the cured materials exhibit the well-known properties of the cured polysulfide polymers such as elasticity, tensile strength, low permeability to gases and resistance to degradation from sunlight, atmospheric oxidation, acids, caustics, solvents, fuels and oils. The present compositions are well suited for uses in which temperature extremes, chemically harsh environments and mechanical stress are experienced. Therefore the present compositions are particularly useful as high performance coating for primary containment, like chemical or fuel storage tanks and secondary containment like coating with crack-bridging ability in concrete, earthen dikes or floors in process areas exposed to chemical or fuel spill etc. Uses may also be envisaged in aerospace applications as aerospace sealant, fuel tank sealant and the lining of fuselages and the like, coating for ship ballast and fuel tanks or railcar linings and so forth.

The invention of the present application may be partially characterized by reference to this non-exclusive list of exemplary items:
1 A polymer composition comprising a) a multifunctional thioester, b) elemental sulfur, and c) at least one ethylenically unsaturated compound.
2 A polymer composition of item 1, wherein the at least one ethylenically unsaturated compound is an activated ethylenically unsaturated compound, preferably an acrylate compound.
3 A polymer composition of either item 1 or 2, wherein the multifunctional thioester is selected from:
   (i) RCO - S - R' - S - COR, wherein R independently is, linear, branched or cyclic C1 - C10 alkyl, aryl, heteroaryl; R' is a linear, cyclic or branched C1 - C10 alkyl, alkoxy, or
      a single bond; or
   (ii) a compound of the formula 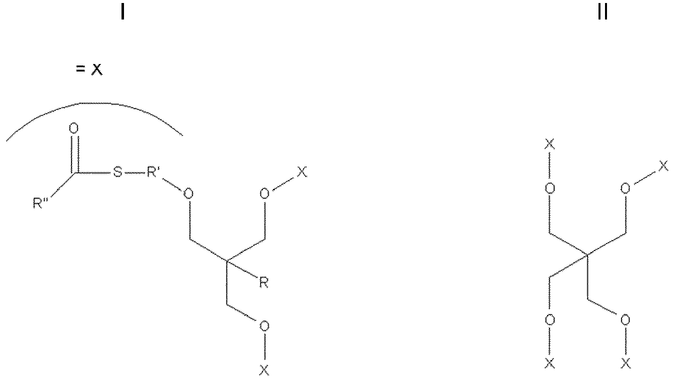 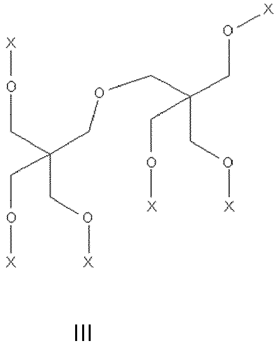
   wherein
   X independently is H or RCO-S-R1-; or a polymer of the Formula
   HS[(CH₂(R')_{b}CH₂Sₐ)_{c}(R"Sₐ)_{d}(SH)_{f}]CH₂(R')_{b}CH₂SH where a is 1 - 5, b is 0 or 1, c is 5 - 10, d is 0 - 0.05c and 0.05c ≥ f ≥ d, 1 > f which is d times (number of free valencies in R"- 2), R' is O, S or a divalent saturated organic radical consisting of C and H atoms and optionally O and/or S in COC, CSaC or OH links.
   R independently is C1 - C20, optionally substituted, linear, cyclic or branched alkyl, aryl alkylaryl, aralkyl;
   R1 independently is C1 - C20, optionally substituted, linear, cyclic or branched alkyl, aryl alkylaryl, aralkyl, preferably-(CH2)1-5-CO- and most preferred -CH2-CH2-CO-, and
   R2 is either H or C1-C20 alkyl.
4 A polymer composition of any of the items from 1 - 3, wherein the multifunctional thioester component are derived from polyols. Polyols are compounds with multiple hydroxyl functional groups available for organic reactions. This includes compounds with two hydroxyl groups, a diol, with three hydroxyl groups, a triol, with four, a tetrol and so on. Monomeric polyols such as glycerin, pentaerythritol, ethylene glycol and sucrose are of particular interest, but polymeric polyols may also be utilized. Multifunctional thioester compounds may also be derived from polyalcohols, such as polyols, polyetherols, polyesterols or polyacrylate polyols with respective functionality, preferably with a functionality of at least two. A preferred multifunctional thioester is derived from pentaerythritol-tetramercaptopropionate. Difunctonal thioester derived from dimercaptanes may also be envisaged such as distearoyl-1,4-butanethiolate or based on disulfanes, such as distearoyldisulfane or dibenzoyldisulfane, i.e. thioester compounds of the general structure stearoyl-S-S-stearoyl or benzoyl-S-S-benzoyl. Further the multifunctional thioester may present 2 - 20 hydrolysable functional groups, preferably 2 - 6 and more preferred 4 - 6, where such functional groups may preferably also constitute branched moieties. Advantageous thioester compounds may be selected from distearoyldisulfane, dibenzoyldisulfane, stearoyldiester of 1,4-butandithiol or the adipate of 1,4-butandithiol, succinate of 1,4-butandithiol tetraacetate of pentaerithritol-tetrakis-mercaptopropionate, tetrabenzoate of pentaerithritol-tetrakis-mercaptopropionate, diacetate of poly(ethyleneglycol) dithiol, distearate of poly(ethylene glycol) dithiol, polymeric ester of adipate and poly(ethylene glycol) dithiol, diacetate of benzene dithioles, diacetate of toluene dithioles, triacetate of trimethylolpropane tris(3-mercaptopropionate) or maleate of poly(ethylene glycol) dithiol.
5 A polymer composition of any of the items above, wherein the acrylate component is selected from acrylates that are one to 20-fold ethoxylated or propoxylated or mixed ethoxylated or propoxylated or non-oxylated glycerol, trimethylolpropane, trimethylolethane or pentaerythrite. Advantageous acrylate components may further be selected from ethyleneglycoldiacrylate, 1,2-propanedioldiacrylate, 1,3-propanedioldiacrylate, 1,4-butanedioldiacrylate, 1,3-butanedioldiacrylate, 1,5-pentanedioldiacrylate, 1,6-hexanedioldiacrylate, 1,8-octanedioldiacrylate, neopentylglycoldiacrylate, 1,1-, 1,2-, 1,3- or 1,4-cyclohexanedimethanoldiacrylate, 1,2-, 1,3-or 1,4-cyclohexanedioldiacrylate, trimethylolpropanetriacrylate, ditrimethylolpropanepenta- or hexaacrylate, pentaerythrittriacrylate, pentaerythrittetraacrylate, glycerindiacrylate, glycerintriacrylate, di- or polyacrylates of sugar alcohols, preferably of sorbit, mannit, diglycerol, threit, erythrit, adonit (Ribit), arabit (Lyxit), xylit, dulcit (Galactit), maltit, isomaltit, or polyesterpolyols, polyetherols, polytetrahydrofuran, poly-1,3-propanediol, polyethyleneglycol, urethaneacrylates or polycarbonateacrylates.
6 A polymer composition of any of the items above, wherein the acrylate component is selected from the preferred components 1,4-butanedioldiacrylat, 1,6-hexanedioldiacrylat, trime-thylolpropanetriacrylate, pentaerythrittetraacrylate, triacrylate of one to twenty fold ethoxylated trimethylolpropane or tetraacrylate of one-to twenty fold ethoxylated pentaerythrit.
7 A polymer composition of any of any of the items above, further containing one or more catalysts.
8 A polymer composition of item 7, wherein the one or more catalyst is selected from amine, phosphine, Lewis acids, carboxylates, organyls of tin (Sn), a lanthanide (Ln), zink (Zn), bismuth (Bi), titanium (Ti), zirconium (Zr), or any of the known catalysts used to increase the rate of reaction or in acceleration of addition reactions in coating and sealing compositions. Such catalysts may be selected from primary, secondary or tertiary amines as well as quarternary ammonium salts, imines or iminiumsalts. These may be aliphatic or aromatic, wherein aliphatic are preferred. Preferred tertiary amines may be selected from trimethylamine, triethylamine, tri-n-butylamine, ethyl-di-iso-Pro¬pylamine, methyl-di-iso-propylamine, N-methylmorpholine, Nmethylpiperidine, tri-ethanol¬amine, N,N-dimethylethanolamine, N-methyldicyclohexylamine, dimethylcyclohexylamine, diethylcyclohex-ylamine, methyldicyclohexylamine, ethyldicyclohexyl-amine, 4-N,N-dimethylaminopyridine, 1,5-diazabicyclo[4.3.0]-non-5-en (DBN), 1,8-diazabicyclo[5.4.0]-undec-7-en (DBU), tetramethyl-guanidine, pyrrocoline, quinuclidine, 3-aminoquinuclidine or 3-hydroxyquinuclidine. Catalysts of particular advantage are 1,4-diazabicyclo[2,2,2]octan (DABCO), 1,5-diazabicyclo[4.3.0]-non-5-en (DBN), 1,8-diazabicyclo[5.4.0]-undec-7-en (DBU), N-methyldicyclohexylamine, quinuclidine, 3-aminoquinuclidine or 3-hydroxyquinuclidine, trimethylphosphine, triethylphosphine, tri-n-butylphosphine, dimethylphenylphosphine, Ti(IV) isopropoxide, Ti(IV) acetylacetonate, Ti(IV)tetrachloride, Zr(IV)acetate, Zr(IV)isopropoxide, Snchloride, Snnitrate, dibutyltinlaurate, or Zn(II)chloride.
9 A polymer composition of item 7, wherein the one or more catalyst is preferably selected from DABCO, DBN, DBU, N- methyldicyclohexylamine, quinuclidine, 3-aminoquinuclidine or 3-hydroxyquinuclidine, trimethylphosphine, triethylphosphine, tri-n-butylphosphine, dimethylphenylphosphine, Ti(IV) isopropoxide, Ti(IV) acetylacetonate, Ti(IV)tetrachloride, Zr(IV)acetate, Zr(IV)isopropoxide, Snchloride, Snnitrate, dibutyltinlaurate, Zn(II)chloride most preferred are DBU or N-Methyldicyclohexylamine.
10 A polymer composition of any of the items above further containing a water-capturing agent or desiccant.
11 A polymer composition of any of the items above, wherein the ratio by weight of thioester : sulfur : acrylate is in the range from 4 : 1 : 4 to 1 : 2 : 1, preferably 1: 1 : 1.
12 A polymer composition of any of the items above, comprising
   1 - 20 weight-% thioester,
   1 - 70 weight-% sulfur,
   10 - 50 weight-% acrylate,
   0 - 5 weight-% additive.
13 Use of a polymer composition of any of the items above as a one-component curable polymer composition.
14 Use of a polymer composition of any of the items above as an adhesive, sealant or coating material.
15 Method of making a one-component curable polymer composition comprising the steps of mixing components of items 1 - 12.
16 Method of making one-component curable polymer composition comprising the steps of combining components of claims 1 - 12, wherein the thioester, sulfur and ethylenically unsaturated compound are mixed under water-free conditions to give a homogeneous paste, followed by addition of water capturing agent and catalysts and packing the resulting mixture into water and humidity proof containers.
17 A water and humidity proof container containing a one-component curable polymer composition of any of the items 1 - 12.

### Examples

### Example 1:

6.0 g sulfur powder and 1.2 g dibenzoyldisulphane were mixed with 2.0 g glycerolformalmethacrylate and 5.0 g dipentaerythritol pentaacrylate mixed and ground to give a homogeneous paste. Then 100 mg 4-toluolsulfonylisocyanate and 140 mg 1,8-diazabicycloundec-7-ene was added. The mixture was stirred and ready for application.
When exposed to humid environment (100% relative humidity, 23°C), the pot life was approx. 60 min. The material was tack-free after 24 hours and a plate of 5 mm thickness was fully cured after 3 days. When not exposed to humidity or water, the mixture was stable for more than five months in a closed vessel. The fully cured material showed a hardness of 80 Shore A.

### Example 2:

6.0 g sulfur powder and 1.2 g dibenzoyldisulphane were mixed with 2.0 g poly (propyleneglycol) - diacrylate (Mn = 900 g/mol) and 5.0 g dipentaerythritol pentaacrylate, mixed and ground to give a homogeneous paste. Then 100 mg 4-toluolsulfonylisocyanate and 140 mg 1,8-diazabicycloundec-7-ene were added. The mixture was stirred and ready for application. When exposed to humid environment (100% relative humidity, 23°C), the pot life was approx. 60 min. The material was tack-free after 24 hours and a plate of 5 mm thickness was fully cured after 3 days. When not exposed to humidity or water, the mixture was stable for more than five months in a closed vessel. The fully cured material showed a hardness of 60 Shore A.

### Example 3:

6.0 g sulfur powder and 1.2 g distearoyldisulphane were mixed with 2.0 g glycerolformalmethacrylate and 5.0 g dipentaerythritol pentaacrylate were mixed and ground to give a homogeneous paste. Then 100 mg 4-toluolsulfonylisocyanate and 140 mg 1,8-diazabicycloundec-7-ene were added. The mixture was stirred and ready for application.
When exposed to humid environment (100% relative humidity, 23°C), the pot life was approx. 60 min. The material was tack-free after 24 hours and a plate of 5 mm thickness was fully cured after 3 days. When not exposed to humidity or water, the mixture was stable for more than five months in a closed vessel. The fully cured material showed a hardness of 55 Shore A.

### Example 4:

6.0 g sulfur powder, 2 g of BaSO₄ powder and 1.2 g dibenzoyldisulphane were mixed with 2.0 g glycerolformalmethycrylate and 5.0 g dipentaerythritol pentaacrylate were mixed and ground to give a homogeneous paste. Then 100 mg 4-toluolsulfonylisocyanate and 140 mg 1,8-diazabicycloundec-7-ene were added. The mixture was stirred and ready for application. When exposed to humid environment (100% relative humidity, 23°C), the pot life was approx. 60 min. The material was tack-free after 24 hours and a plate of 5 mm thickness was fully cured after 3 days. When not exposed to humidity or water, the mixture was stable for more than five months in a closed vessel. The fully cured material showed a hardness of 89 Shore A.

### Example 5:

6.0 g sulfur powder and 1.2 g dibenzoyldisulphane were mixed with 1.0 g glycerolformalmethycrylate as reactive thinner, 1.0 g Liquid rubber LIR 30 (supplier: Kuraray, polyisoprene with Mn = 30000 g/mol) 5.0 g dipentaerythritol pentaacrylate were mixed and ground to give a homogeneous paste. Then 100 mg 4-toluolsulfonylisocyanate and 140 mg 1,8-diazabicycloundec-7-ene were added. The mixture was stirred and ready for application. When exposed to humid environment (100% relative humidity, 23°C), the pot life was approx. 60 min. The material is tack-free after 24 hours and a plate of 5 mm thickness was fully cured after 3 days. When not exposed to humidity or water, the mixture was stable for more than five months in a closed vessel. The fully cured material showed a hardness of 30 Shore A.

### Example 6:

29.9 g adipic acid dichloride were mixed with 33.0 g stearoyl chloride and 20.0 g 1,4-butanethiol under dry conditions and warmed to 30°C for 1 h until a solid material, thiopolymer, was obtained.
9.0 g sulfur powder and 1.8 g of thiopolymer were mixed with 3.0 g glycerolformalmethycrylate as reactive thinner, 7.5 g dipentaerythritol pentaacrylate were mixed and ground to give a homogeneous paste. Then 120 mg 4-toluolsulfonylisocyanate and 860 mg 1,8-diazabicycloundec-7-ene were added. The mixture was stirred and ready for application.
When exposed to humid environment (100% relative humidity, 23°C), the pot life was approx. 60 min. The material was tack-free after 24 hours and a plate of 5 mm thickness was fully cured after 3 days. When not exposed to humidity or water, the mixture was stable for more than five months in a closed vessel. The fully cured material showed a hardness of 68 Shore A.

## Claims

1. A polymer composition comprising:
a) a multifunctional thioester,
b) elemental sulfur, and
c) at least one ethylenically unsaturated compound.

2. A polymer composition of claim 1, wherein the at least one ethylenically unsaturated compound is an activated ethylenically unsaturated compound, preferably an acrylate compound.

3. A polymer composition of claim 1 or 2, wherein the multifunctional thioester is selected from:
(i) RCO - S - R' - S - COR, wherein R independently is, linear, branched or cyclic C₁-C₁₀ alkyl, aryl, heteroaryl; R' is a linear, cyclic or branched C₁ - C₁₀ alkyl, alkoxy, or a single bond; or
(ii) a compound of the formula 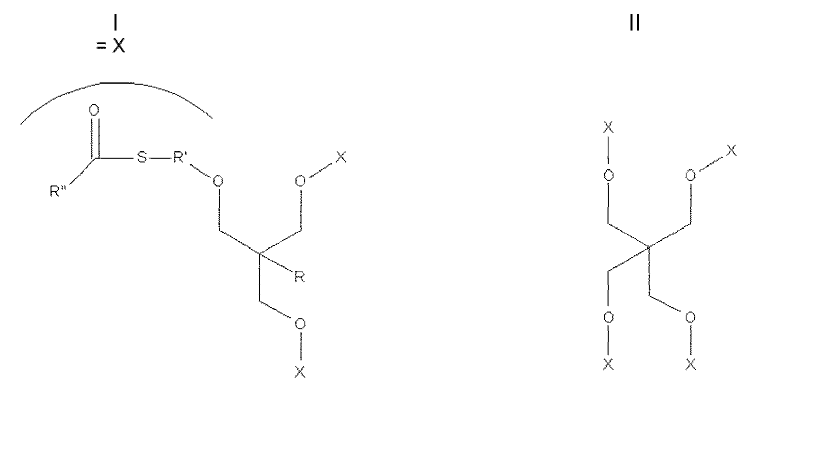 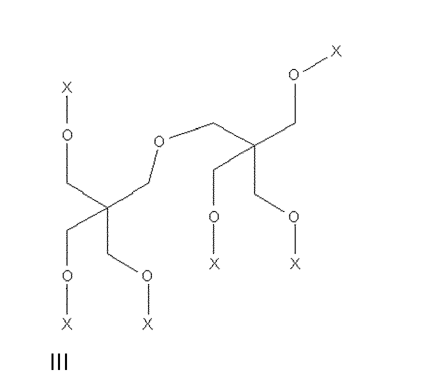 wherein
X independently is H or RCO-S-R¹-; or a polymer of the Formula HS[(CH₂(R')_{b}CH₂Sₐ)_{c}(R"Sₐ)_{d}(SH)_{f}]CH₂(R')_{b}CH₂SH where a is 1 - 5, b is 0 or 1, c is 5- 10, d is 0 - 0.05c and 0.05c ≥ f ≥ d, 1 > f which is d times (number of free valencies in R" - 2), R' is O, S or a divalent saturated organic radical consisting of C and H atoms and optionally O and/or S in COC, CSₐC or OH links.
R independently is C₁ - C₂₀, optionally substituted, linear, cyclic or branched alkyl, aryl alkylaryl, aralkyl;
R¹ independently is C₁ - C₂₀, optionally substituted, linear, cyclic or branched alkyl, aryl alkylaryl, aralkyl, preferably-(CH₂)₁₋₅-CO- and most preferred -CH₂-CH₂-CO-, and
R² is either H or C₁-C₂₀ alkyl.

4. A polymer composition of any of claims 1 - 3, wherein the multifunctional thioester component is selected from distearoyldisulfane, dibenzoyldisulfane, stearoyldiester of 1,4-butandithiol, adipate of 1,4-butandithiol, succinate of 1,4-butandithiol tetraacetate of pentaerithritol-tetrakis-mercaptopropionate, tetra-benzoate of pentaerithritol-tetrakismercaptopropionate, diacetate of poly(ethyleneglycol) dithiol, distearate of poly(ethylene glycol) dithiol, polymeric ester of adipate and poly(ethylene glycol) dithiol, diacetate of benzene dithioles, diacetate of toluene dithioles, triacetate of trime-thylolpropane tris(3-mercaptopropionate), maleate of poly(ethylene glycol) dithiol.

5. A polymer composition of any of the claims 1 - 4, wherein the acrylate component is selected from 1,4-butanedioldiacrylat, 1,6-hexanedioldiacrylat, trimethylolpropanetriacrylate, pentaerythrittetraacrylate, triacrylate of one to twenty fold ethoxylated trimethylolpropane or tetraacrylate of one-to twenty fold ethoxylated pentaerythrit.

6. A polymer composition of any of the claims 1 - 5, further containing one or more catalyst.

7. A polymer composition of claim 6, wherein the one or more catalysts are selected from 1,4-diaza-bicyclo[2,2,2]octane, 1,5-diazabicyclo[4.3.0]-non-5-en, 1,8-diazabicyclo[5.4.0]-undec-7-en e, N- methyldicyclohexylamine, quinuclidine, 3-aminoquinuclidine or 3-hydroxyquinuclidine, trimethylphosphine, triethylphosphine, tri-n-butylphosphine, dimethylphenylphosphine, Ti(IV) isopropoxide, Ti(IV) acetylacetonate, Ti(IV)-tetrachloride, Zr(IV)-acetate, Zr(IV)isopropoxide, Sn-chloride, Sn-nitrate, dibutyltinlaurate, Zn(II)-chloride, preferably 1,8-diazabicyclo[5.4.0]-undec-7-ene or N-methyldicyclohexylamine.

8. A polymer composition of any of the claims 1 - 7 further containing a water-capturing agent or desiccant.

9. A polymer composition of any of the claims 1 - 9, wherein the ratio of thioester : sulfur :
acrylate is in the range from 4 : 1 : 4 to 1 : 2 : 1, preferably 1: 1 : 1.

10. A polymer composition of any of the claims 1 - 10, comprising
1 - 20 weight-% thioester,
1 - 70 weight-% sulfur,
10 - 50 weight-% acrylate,
0 - 5 weight-% additive.

11. Use of a polymer composition of any of the claims 1 - 10 as a one-component curable polymer composition.

12. Use of a polymer composition of any of the claims 1 - 10 as an adhesive, sealant or coating material.

13. Method of making a one-component curable polymer composition comprising the steps of mixing components of claims 1 - 10.

14. Method of making one-component curable polymer composition comprising the steps of combining components of claims 1 - 10, wherein the thioester, sulfur and ethylenically unsaturated compound are mixed under water-free conditions to give a homogeneous paste, followed by addition of water capturing agent and catalysts and packing the resulting mixture into water and humidity proof containers.

15. A water and humidity proof container containing a one-component curable polymer composition of any of the claims 1 - 10.
